# EUROPEAN PATENT APPLICATION

(11) **EP 1 672 451 A1**
(43) Date of publication of application: **21.06.2006**
(21) Application number: 05257806.9
(22) Date of filing: 19.12.2005
(51) Int. Cl.: G05B 19/4067

(54) **State restoration for a numerical controller after interruption of processing**

(30) Priority: 20.12.2004 JP 2004367732
(71) Applicant: FANUC LTD, Minamitsuru-gun, Yamanashi 401-0597 (JP)
(72) Inventor: Kochiay, Hideshi, Ebina-shi, 243-0401 (JP); Sagara, Shouichi, Minamitsuru-gun, Yamanashi 401-0511 (JP); Sonobe, Kazuhiko, Hachiouji-shi, Tokyo 192-0371 (JP)
(74) Representative: Billington, Lawrence Emlyn

(57) **Abstract**

A numerical controller that accurately restores a state in a resumption point and is capable of auto-generating a state restoring program for restoring to the resumption point without executing a machining program. The numerical controller is a numerical controller that carries out the machining according to the machining program, and has a restoring function for restoring the state at the time of suspension by using a resumption program created from the machining program. The restoring function includes the command extracting means (3) for extracting commands to execute machine operations from the resumption program and state restoring program creating means (6) which arranges the extracted commands in the order of programs of the machining program and creates the state restoring program. Miscellaneous function commands issued before the resumption point of the machining program and call commands such as macro commands to implement the preset operations are auto-created in the order of execution processing of the machining program in the state restoring program separately from the machining program without the operator's operation.

## Description

### BACKGROUND OF THE INVENTION

### 1. Field of the Invention

The present invention relates to a numerical controller, and more specifically to a numerical controller which restores a state of a machine tool when machining is resumed after suspension of a machining program.

### 2. Description of Related Art

A numerical controller has a miscellaneous function command controller for controlling miscellaneous function commands including an M command, an S command, and a T command and the like, an axis displacement controller that controls a servo axis, and a sequence controller such as a PC (programmer controller) that stores sequence programs, and is connected to an operating panel and a power electric circuit disposed on the machine tool side, a spindle amplifier, a speed control circuit and the like through interfaces.

When machining, such as cutting and grinding, is performed by a machine tool, auxiliary operations including attachment/removal of a workpiece, activation/deactivation of the spindle motor, ON/OFF operation of cutting oil, tool selection, and the like are carried out.

These auxiliary operations are performed when the sequence controller receives a miscellaneous function signal (M command), a tool-selecting signal (T command) and the like that are transmitted from the miscellaneous function command controller.

When the machining is performed by executing a machining program, for example, it sometimes happens that the execution of the machining program is suspended to carry out a manual operation for the removing operation of swarf produced during cutting, tool exchange, etc.

In general, when the machining program is in execution, the state of the machine tool, which is recognized by the miscellaneous function command controller and the axis displacement controller, accords with the actual state of the machine tool. For instance, the tool that is recognized by the miscellaneous function command controller as the one attached to the machine tool agrees with the tool that is really attached to the machine tool. Moreover, the position of each axis of the machine tool, which is recognized by the axis displacement controller, also accords with the position of each axis of the actual machine tool.

Usually, the machining is performed while the states agree with each other as stated during the execution of the machining program. However, if the execution is suspended, and the machine tool is operated through a manual operation or the like, the states recognized by the controllers and the state of the machine tool are each different depending on suspension time and after the implementation of interruption.

For example, during the execution of the machining program, if a command to turn on coolant is issued, the coolant is turned on on the machine tool side. The ON state is maintained until a command to turn off the coolant is issued.

At this point, if the machining program is suspended, the execution of the machining program is suspended, but the coolant on the machine tool side is still on. The operator issues a command to turn off the coolant by manual operation, and in response to this command, the machine tool turns off the coolant.

Thereafter, if the machining program is resumed, the machining is resumed with the coolant remaining in the OFF state on the machine tool side. In contrast, the state of the coolant at the time of suspension is an ON state, so that at the time of resumption, the machining is resumed in a different state from the state at the time of suspension.

The foregoing is an example of miscellaneous functions. Similarly in axis displacement, at the time of resumption, the machining is sometimes resumed in a different state from the state at the time of suspension. For example, in case that the operation cannot be performed unless the tool is displaced from a tool position at the time of suspension, the tool position at the time of suspension differs from the tool position at the time of resumption after interruption due to tool displacement. Normal machining cannot be expected if the machining program is resumed in the above state. Therefore, it is necessary to carry out a restoring operation, such as returning the machine position to that at the time of suspension and restoring to the machine state at the time of suspension.

It has been pointed out that the above-mentioned numerical controller has the problem that when the machining program is resumed by implementing the interruption processing after being suspended, the operation by the operator is required, which is time-consuming, and moreover the machine gets damaged if the accurate state fails to be restored. JP 6-202723A (paragraph [0042]) suggests a numerical control machine tool that solves this problem.

The numerical control machine tool in Publication No. 6-202723 discloses the technology of storing a machine state at the time of suspension of a machining program, comparing a current machine state with the machine state at the time of suspension, which has been stored, at the time of resumption, and generating a state restoring program so that there is no difference therebetween.

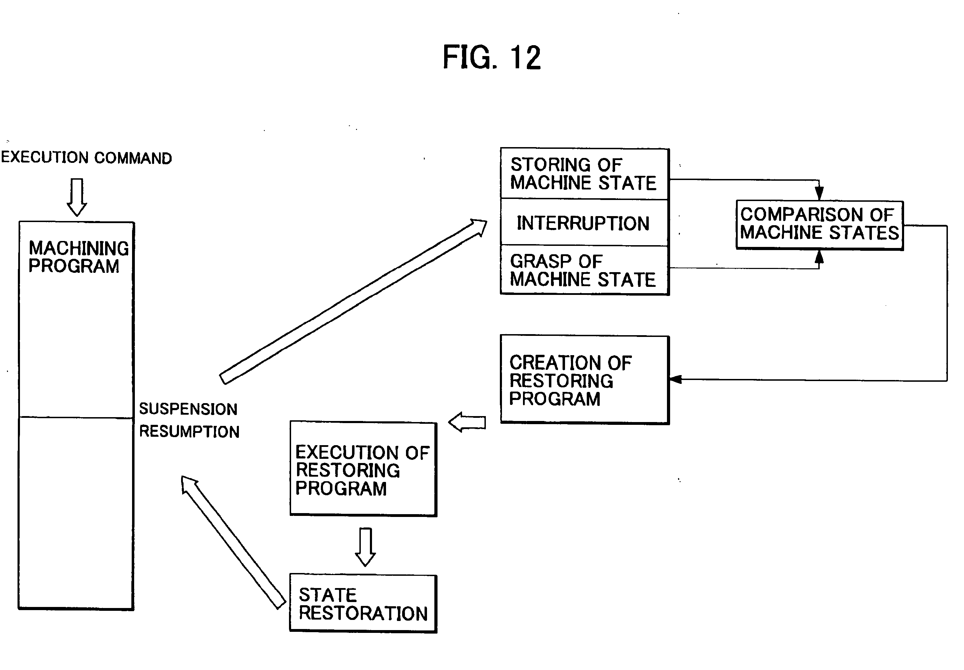

FIG. 12 is a view for explaining a restoring operation by the above-mentioned numerical control machine tool. This restoring operation has the problem that different results are obtained in the case of a normal operation and in the case of resumption of the program. The reason is that if a program for reading a tool magazine state and carrying out the processing proper for the state is created as a tool exchange macro command, this tool exchange macro command is not reflected and implemented in the restoring operation.

JP 2-300801A is well known as technology in which miscellaneous function commands to be executed at the time of resumption are taken into account. This document discloses a numerical controller that stores MST commands in groups during the operation of a machining program and restores the MST commands with respect to each group when the machining resumption is carried on.

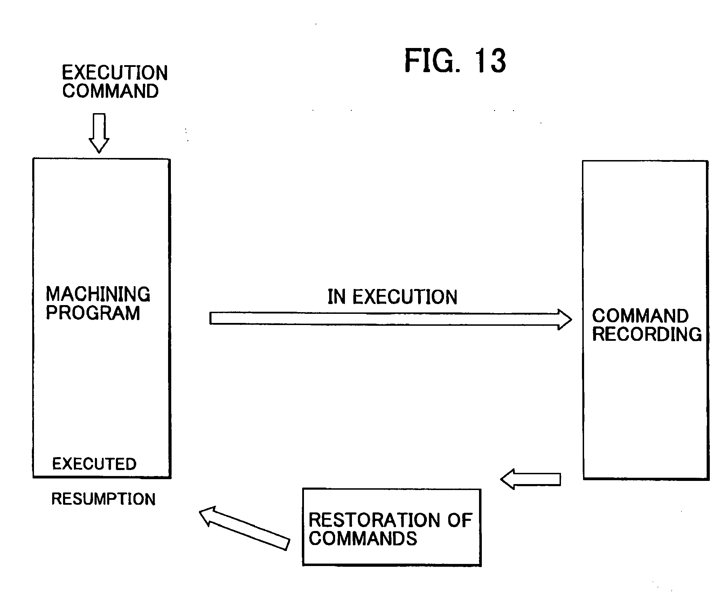

FIG. 13 is a view for explaining a restoring operation performed by the numerical controller. This restoring operation stores a command implemented during the execution of the machining program and restores this command, to thereby create the same state as that at the time of the previous machining suspension.

According to JP 6-202723A, it is necessary to store the machine state at the time of suspension and to find the machine state at the time of resumption as well. This causes the problem that the state cannot be restored in the event of failure in the detection of the machine state.

Furthermore in JP 6-202723A, when the state restoring program is created, a program for comparing two states and operating to make the machine state at the time of resumption similar to the machine state at the time of suspension is auto-created. However, for example in case that the tool exchange is carried out by the tool exchange macro command, even if the machine state is restored to the state at the time of suspension by the state restoring program that is auto-created, the tool exchange macro command is not implemented in the state restoring program. This could incur harmful effects attributable to non-execution of the macro command, which include the fear that the state cannot be restored to the same as the state at the time of suspension.

According to JP 2-300801A, the MST commands cannot be restored unless the machining program is actually executed, so that it is impossible to apply to a machining program that is not actually performing the machining. Moreover, even the machining program in actual execution has the problem that it is impossible to perform resumption from an unexecuted position in the machining program.

In the tool exchange macro, if the tool magazine state is read out prior to the actual macro execution to carry out the processing proper for the state, the tool magazine is generally controlled by miscellaneous functions, which produces the problem that part of the macro is executed before the magazine is activated, and the tool state in the resumption point cannot be accurately restored.

### SUMMARY OF THE INVENTION

The present invention provides to a numerical controller that accurately restores a state in a resumption point and auto-creates a state restoring program for restoring the state to the resumption point without execution of a machining program.

The present invention auto-creates miscellaneous function commands issued before a resumption point of the machining program and call commands such as macro commands to implement preset operations in the order of execution processing of the machining program in a state restoring program separately from the machining program without the operator's operation.

A command of the state restoring program to be executed prior to positioning to the resumption point is auto-created. By auto-generating the state restoring program for restoring to the resumption point from the machining program only, it is possible to create the state restoring program without execution of the machining program. By executing the state restoring program prior to the positioning of machining resumption, the state in the resumption point is accurately restored.

A numerical controller of the present invention controls a machine tool according to machining programs and has a function of resuming a suspended machining program. The numerical controller comprises: registered command storage means storing registered commands to perform operations of the machine tool in the machining programs; command extracting means for extracting registered commands stored in the command storage means in the machining program to be resumed; state restoring program creating means for creating a state restoring program for restoring a state of the machine tool at the time of suspending the machining program by arranging the commands extracted by the command extracting means in a programmed order in the machining program to be resumed; and executing means for executing the state restoring program created by the state restoring program creating means for resuming the suspended machining program.

With the above configuration, the creation of the state restoring program can be performed without the operator's manual operation.

The registered commands may include a command to perform a series of operations by a combination of a plurality of miscellaneous function commands, a combination of miscellaneous function commands and motion commands, or a macro command.

The registered commands may include commands registered in groups each for performing related operations of the machine tool, the command extracting means extracts the grouped commands in the machining program into the respective groups, and the state restoring program creating means creates the state restoring program by arranging the commands extracted by the command extracting means in a programmed order in the machining program and using grouped commands present last in the respective groups.

By using grouped commands present last in the respective groups in creating the state restoring program, the same kind of operations are prevented to shorten time required for the state restoration. This is because the state restoration is determined by the command that is set last among the grouped commands to perform related operations, and the other commands do not contribute to the state restoration eventually.

The command extracting means may extract an argument of a macro command included in the grouped commands.

The state restoring program creating means may specify a position of resuming the machining program by designating a block in the machining program. In this case, the designation of the block by the state restoring program creating means may be performed using a sequence number or a block number in the machining program. With these configurations, it is possible to set a state of the machine tool at a position of the machining program which is arbitrarily selected, not only in the case of executing an unexecuted part of the machining program but also in the case of executing the machining program not yet executed.

The command extracting means may extract the registered commands from beginning of the machining program to a block immediately preceding a block at which the machining program is to be resumed.

The registered commands may include a miscellaneous function command of a spindle function command or a tool function command.

The state restoring program is executed prior to a positioning operation of the machine tool to a position at which the machining program is resumed.

According to the present invention, it is possible to accurately restore the state in the resumption point and to auto-create the state restoring program to be restored at the resumption point without executing the machining program.

### BRIEF DESCRIPTION OF THE DRAWINGS

FIG. 1 is a view for explaining each means for generating a state restoring program in a first aspect of a numerical controller of the present invention;
FIG. 2 is a flowchart for explaining a procedure for generating the state restoring program in the first aspect of the numerical controller of the present invention;
FIG. 3 is a schematic view for explaining the creation of the state restoring program according to the first aspect of the present invention;
FIG. 4 is a schematic view for explaining the creation of the state restoring program according to the first aspect of the present invention;
FIG. 5 is a view showing one example of a machining program and of the state restoring program according to the first aspect of the present invention;
FIG. 6 shows a configuration example of a main body of the numerical controller according to the first aspect of the present invention;
FIG. 7 is a view for explaining each means for generating a state restoring program in a second aspect of the numerical controller of the present invention;
FIG. 8 is a flowchart for explaining a procedure for generating the state restoring program in the second aspect of the numerical controller of the present invention;
FIG. 9 is a schematic view for explaining the creation of the state restoring program according to the second aspect of the present invention;
FIG. 10 is a view showing one example of the machining program and of the state restoring program according to the second aspect of the present invention;
FIG. 11 is a configuration example of the main body of the numerical controller according to the second aspect of the present invention;
FIG. 12 is a view for explaining a restoring operation performed by a conventional numerical control machine tool; and
FIG. 13 is a view for explaining a restoring operation performed by a conventional numerical controller.

### DETAILED DESCRIPTION

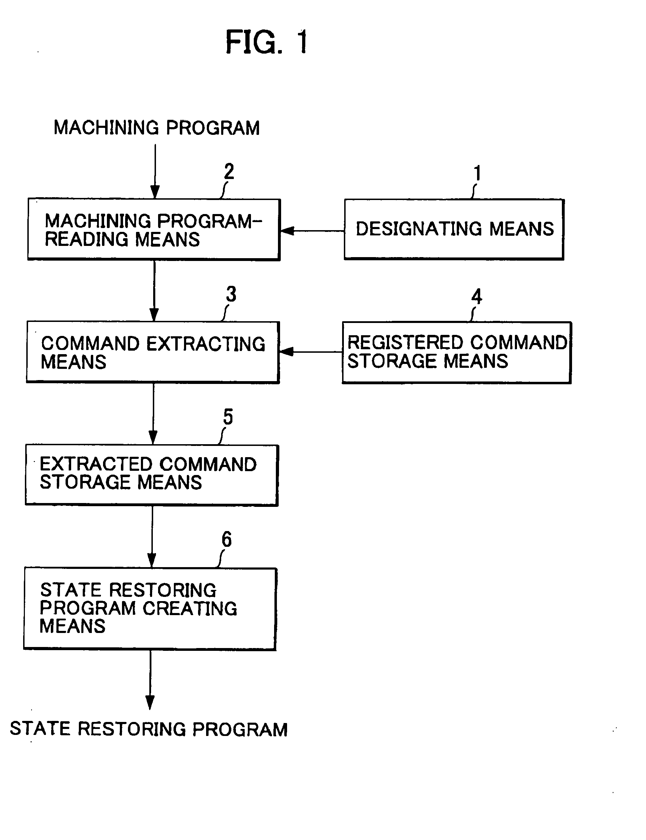

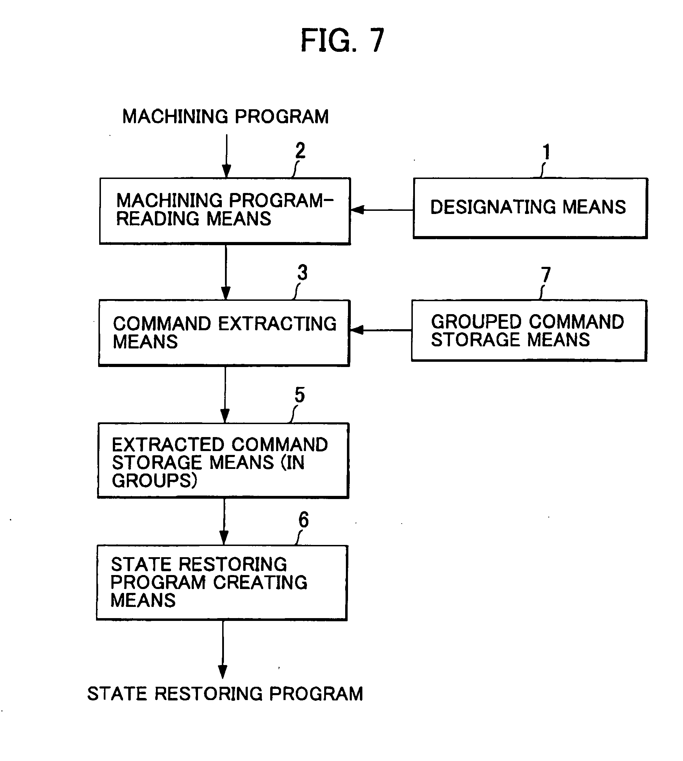

A first aspect of a numerical controller of the present invention will be explained with reference to FIGS. 1 to 6, and a second aspect of the numerical controller of the present invention will be explained with reference to FIGS. 7 to 11. The second aspect is an aspect in which grouped commands are used in creation of a state restoring program.

The numerical controller of the present invention creates the state restoring program by using commands included in a machining program and executes the state restoring program prior to the positioning of machining resumption, to thereby accurately restore a state in a resumption point. By so doing, in case that machining is suspended or the like, a machine state is restored to a suspension point when the machining is resumed.

The restoration of the machine state is achieved by executing the state restoring program. The state restoring program is auto-created separately from the machining program by arranging miscellaneous function commands issued before the resumption point of the machining program and call commands such as macro commands to implement preset operations in the order of execution processing of the machining program. Since the state restoring program is auto-created separately from the machining program, it can be created without actual execution of the machining program and without recording the machine state during actual execution or detecting a current machine state and the like.

FIG. 1 is a view for explaining each means for generating a state restoring program in the first aspect of the numerical controller of the present invention.

Referring to FIG. 1, the first aspect of the numerical controller has machining program-reading means 2 for reading the machining program, designating means 1 for designating a region of a machining program (resumption program) for resuming the machining program by block numbers or sequence numbers, command extracting means 3 for extracting commands included in the region of the machining program (resumption program) which is designated by the designating means 1, registered command storage means 4 storing the commands to be extracted by the command extracting means 3, extracted command storage means 5 for storing the extracted commands taken out by the command extracting means 3, and state restoring program creating means 6 which creates the state restoring program on the basis of the extracted commands stored in the extracted command storage means 5. The command extracting means 3, the registered command storage means 4, the extracted command storage means 5 and the state restoring program creating means 6 configure a restoring function for restoring the state at the time of suspension by using the resumption program.

The machining program-reading means 2 and the means (3 to 6) of the restoring function can be actualized by a calculation device using a CPU provided to the numerical controller and software stored in storage means such as a ROM.

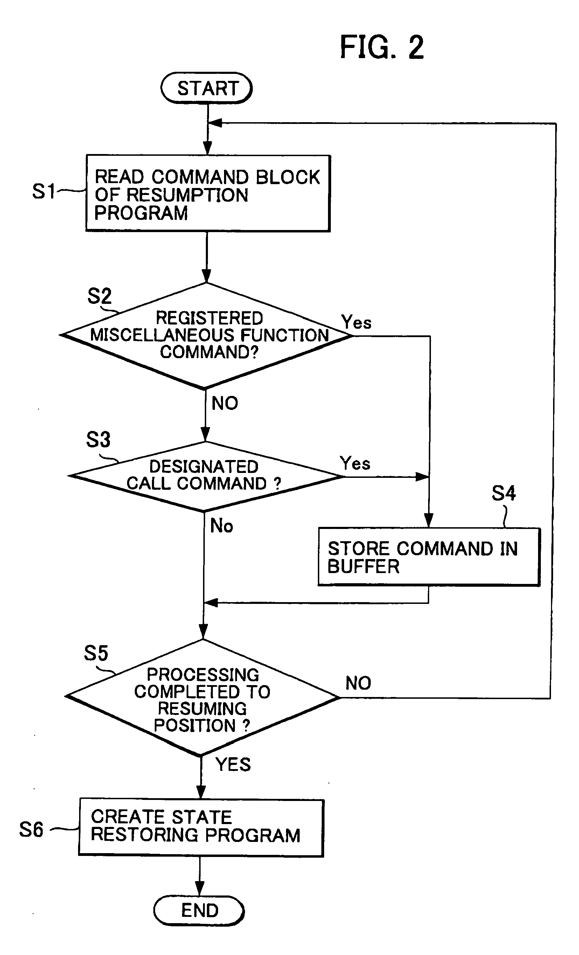

FIG. 2 is a flowchart for explaining a procedure for generating the state restoring program in the first aspect of the numerical controller. The explanation will be provided with reference to each means shown in FIG. 1.

When the state restoring program is created, the operator, for example, at the time of suspension of the machining program, sets a resumption point at which the machining is resumed, determines a program range executed by the machining program by the time the machine state in the resumption point is restored, and specifies the machining program to be resumed by using the designating means 1. The position of resuming the machining program can be specified, for example, by a block number or a sequence number, which may be a block number or a sequence number executed at the time of suspension. Alternatively, a block number or a sequence number immediately prior to the block number or the sequence number executed at the time of suspension may be commanded.

If the block number or the sequence number executed at the time of suspension is stored, the command may be issued automatically instead of by the operator.

The command extracting means 3 reads a command block from the resumption program obtained through specification in the machining program according to the above processing (Step S1), and makes determinations as to whether the registered miscellaneous function commands or the registered call commands are included in the command block that has been read (Steps S2 and 3).

The miscellaneous function commands include a function for rotating and stopping a spindle, spindle function commands to specify a rotational frequency of the spindle and the like, and tool function commands such as specification of the number of a tool to be used and the like, and are preliminarily designated and registered in the storage means. The call commands are, for example, macro commands, and are commands to implement prescribed operations by combining a plurality of miscellaneous function commands. These commands are preliminarily designated and stored in the registered command storage means 4.

In the determination in Steps S2 and 3, if the recorded miscellaneous function commands or call commands are included in the resumption program, these commands to execute machine operations, such as the miscellaneous function commands and the call commands, are stored in the extracted command storage means (buffer) 5 (Step S4).

The processing from Step S1 to Step S4 is repeated to the resuming position (Step S5), and the state restoring program is created by the obtained commands (Step S6).

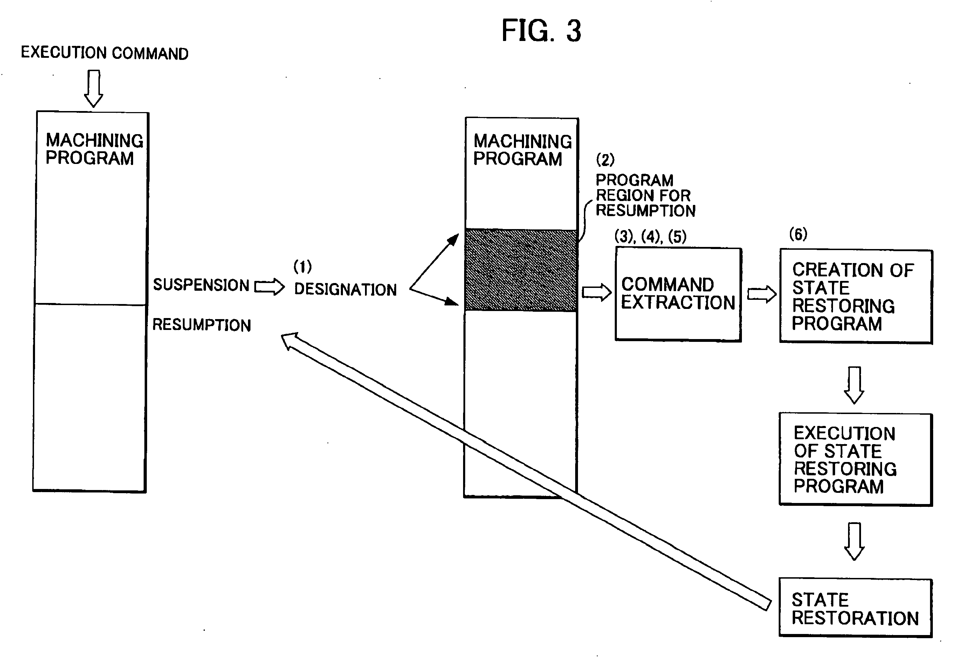

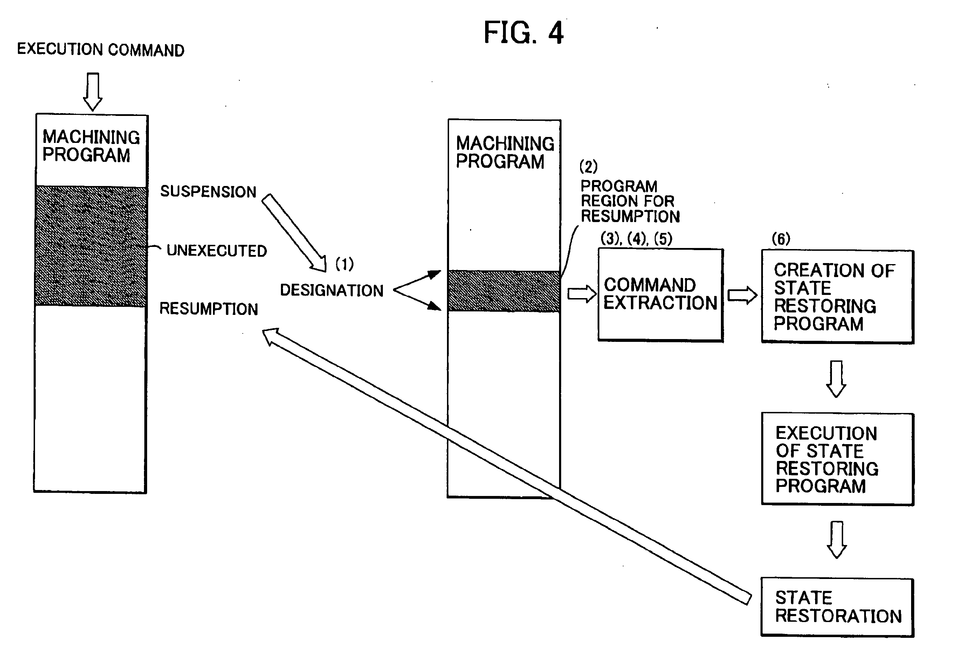

FIGS. 3 and 4 are schematic views for explaining the creation of the state restoring program. FIG. 3 shows the case of restoration to the machine state at the time of suspension, while FIG. 4 shows the case of restoration to an arbitrary machine state, not limited to the time of suspension. The numbers written in FIGS. 3 and 4 are reference numerals provided to the means shown in FIG. 1.

Referring to FIG. 3, when suspension occurs in the execution of the machining program, a program region for resumption (resumption program) is designated in the machining program. The resumption program is shown by a shaded portion in FIG. 3. The registered commands are extracted from the resumption program to create a state restoring program. The created state restoring program is executed, to thereby restore the machine state at the resuming point.

In FIG. 4, as in FIG. 3, when the execution of the machining program is suspended, a program region for resumption (resumption program) is designated in the machining program. At this point, the resumption point can be set as a region of the machining is not really performed. The figure shows an example in which a resuming position is set in such a way that the unexecuted program is sandwiched between the suspension point and the resuming position.

Thereafter, in the same manner as in FIG. 3, the state restoring program is created from the resumption program. Then, the state restoring program is executed to create the machine state in the resumption point that has been set.

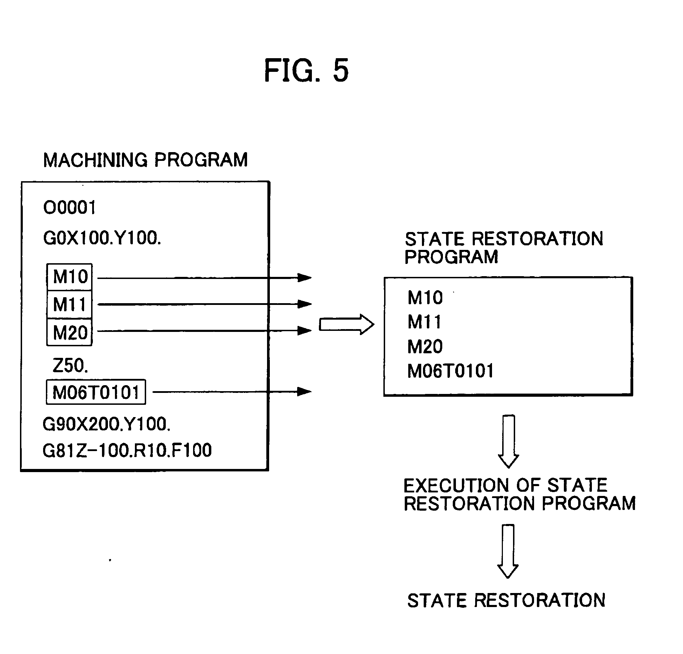

FIG. 5 shows one example of the machining program and of the state restoring program.

Commands denoted by M10, M11, M20, M06 and the like are codes for specifying activation/deactivation of the spindle, tool exchange, etc, and are preliminarily registered. The registered commands are extracted from the machining program to create the state restoring program.

The created state restoring program is a command to execute machine operations, and the execution of this command restores the machine state.

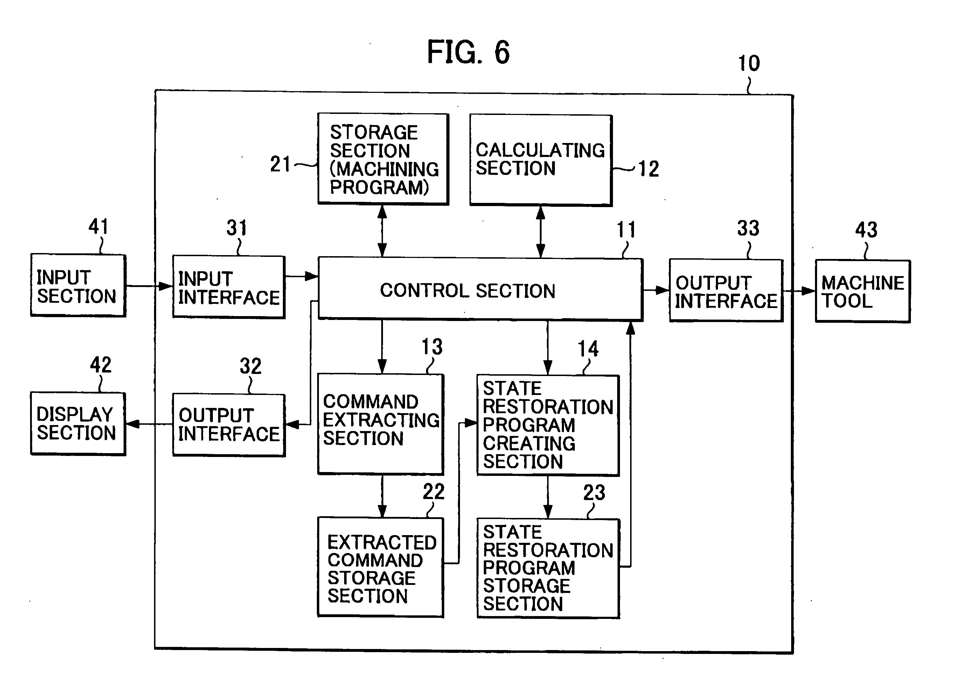

FIG. 6 is a configuration example of a main body of the numerical controller according to the first aspect. A main body of a numerical controller 10 has a control section 11 and an output interface 33 as configuration for drive-controlling a machine tool 43. Processing, such as spindle control and tool selection, is performed according to the machining program stored in a storage section 21.

A configuration for restoring the machine state includes an input interface 31 for inputting the block numbers or sequence numbers of the machining program through an external input section 41, a command extracting section 13 for extracting the registered commands included in the resumption program determined by the above-mentioned input, an extracted command storage section 22 for storing the extracted commands, a state restoring program creating section 14, which creates the state restoring program by using the commands stored in the extracted command storage section 22, a state restoring program storage section 23 which stores the created state restoring program, the output interface 33 for transmitting a command signal to the machine tool 43, which is obtained by executing the state restoring program, which is stored in the state restoring program storage section 23, and the like. Calculation processing required in the control section 11 can be carried out by a calculating section 12. The registered commands can be stored in the command extracting section 13, instead of the storage section 21.

Apart from the foregoing configuration, the control section 11 is connected to a display section 42 through the output interface 32, which makes it possible to display and check the block numbers or the sequence numbers specified by the input section 41, the resumption program, the state restoring program, etc.

Hereinafter, a second aspect of the numerical controller of the present invention will be explained. According to the second aspect, the grouped commands are used in the creation of the state restoring program. With regard to the grouped commands, only the last command among these commands is used to create and execute the state restoring program. This reduces the number of commands required for state restoration and prevents the same kind of commands from being executed more than once, thereby shortening time required for state restoration.

FIG. 7 is a view for explaining each means for generating a state restoring program in the second aspect of the numerical controller of the present invention.

In FIG. 7, the second aspect of the numerical controller is virtually the same as the first aspect, and has machining program-reading means 2 for reading the machining program, designating means 1 for specifying a program range to be resumed in the machining program, command extracting means 3 for extracting commands included in the resumption program specified by the designating means 1, grouped command storage means 7 for grouping and storing the commands extracted by the command extracting means 3, extracted command storage means 5 for storing the extracted commands taken out by the command extracting means 3, and state restoring program creating means 6 which creates the state restoring program on the basis of the extracted commands stored in the extracted command storage means 5.

The restoring function according to the second aspect includes the grouped command storage means 7 instead of the registered command storage means 4 of the first aspect, in addition to the command extracting means 3, the extracted command storage means 5, and the state restoring program creating means 6.

The grouped command storage means 7 sorts the miscellaneous function commands and the call commands by functions. The machine state determined by the grouped commands does not depend on the commands that appear in the middle of the grouped commands, but is determined by the command that appears last.

On this account, the command extracting means 3 of the second aspect extracts the grouped commands from the resumption program with reference to the grouped commands stored in the grouped command storage means 7. The state restoring program creating means 6 extracts only the command that appears last in the grouped commands and creates the state restoring program.

The machining program-reading means 2 and the restoring means (3 to 7) can be actualized by a calculation device using a CPU provided to the numerical controller and software stored in storage means such as a ROM.

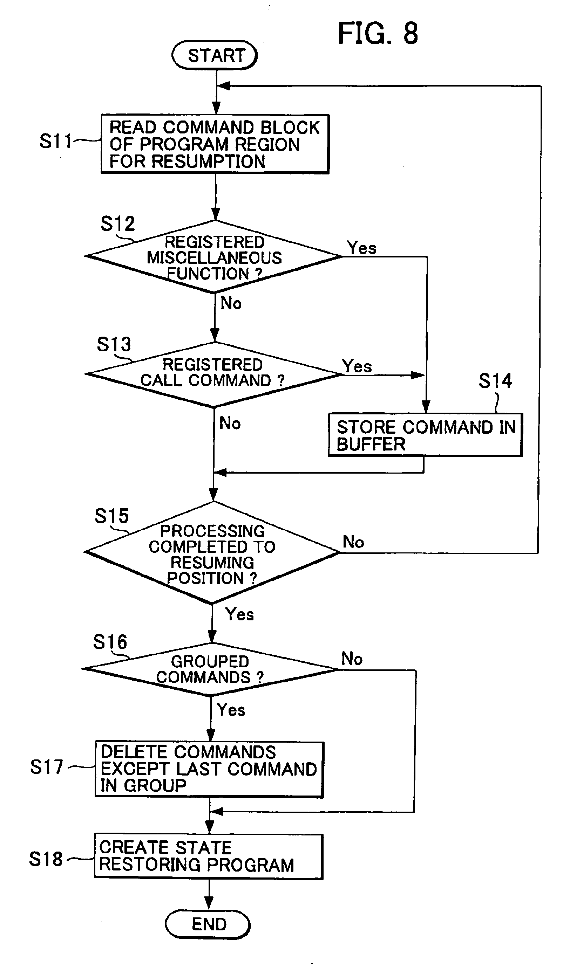

FIG. 8 is a flowchart for explaining a procedure for generating a state restoring program in the second aspect of the numerical controller. The explanation will be provided with reference to the means shown in FIG. 2. The generating procedure is virtually the same as the first aspect, apart from the use of the grouped commands.

As in the first aspect, the command extracting means 3 reads a command block from the resumption program (Step S11), and makes a determination as to whether the registered miscellaneous function commands or the registered call commands are included in the command block that has been read in.

The miscellaneous function commands or the call commands are grouped and registered to be stored in the registered command storage means 4 in advance (Steps S12 and 13).

In the determination in Steps S12 and 13, if the registered miscellaneous function commands or the call commands are included in the resumption program, commands to execute machine operations, such as these miscellaneous function commands and the call commands, are stored in the extracted command storage means 5 (buffer). In addition, if the commands are the grouped commands, group names thereof or the like are stored (Step S14).

The processing from Step S11 to Step S14 is repeated to the resuming position (Step S15).

In case that the grouped commands are included in the commands stored in the extracted command storage means 5 (buffer) (Step S16), commands except the last command that appears last in the group are deleted (Step S17), and the state restoring program is created (Step S 18).

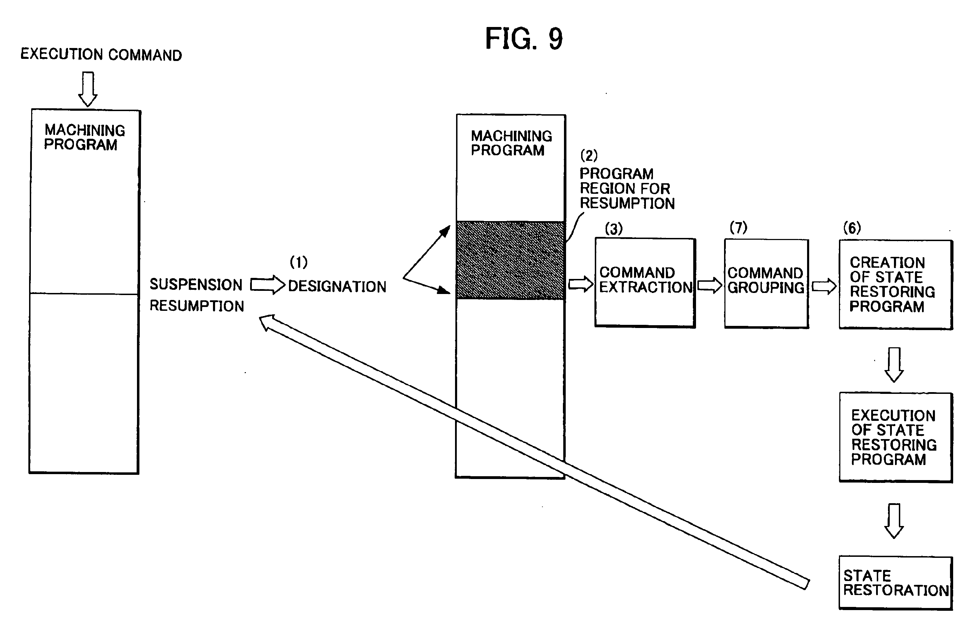

FIG. 9 is a schematic view for explaining the creation of the state restoring program. Although FIG. 9 shows the case of restoration to the machine state at the time of suspension, the same applies to the case of restoration to an arbitrary machine state, not limited to the time of suspension. The numbers written in FIG. 9 are reference numerals provided to the means shown in FIG. 7.

In FIG. 9, when execution is suspended in the machining program, a program region for resumption is designated in the machining program as shown by a shaded portion. Registered commands are extracted from the designated program region. In case that the commands are the grouped commands, the extracted command is stored with its group name. The commands: are arranged in order using the stored commands and group names, to thereby create the state restoring program. At this point, as to the command groups, only the last command in each group, namely the command that appears last, is taken out, to thereby create the state restoring program. By executing the created state restoring program, the machine state is restored to the resumption point.

The resumption point may be the machine state where suspension is resumed or may be set in a part where the machining is not actually performed.

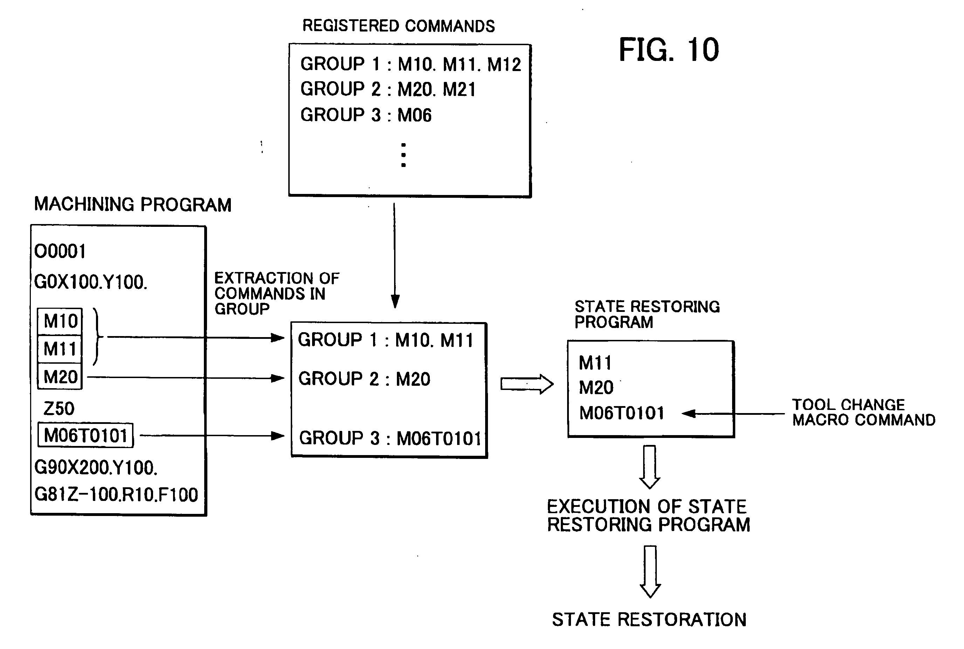

FIG. 10 shows one example of the machining program and of the state restoring program.

Commands denoted by M10, M11, M20, M06 and the like are codes for specifying the activation/deactivation of the spindle, tool exchange, and the like, and are registered in advance as described above. These registered commands are extracted from the machining program. At this point, if the commands are sorted into groups, the command groups are stored according to the group names thereof or the like.

For example, as the command groups, a group 1 includes M10, M11 and M12, and a group 2 includes M20 and M21. A group 3 is a command for calling the M06 command.

The creation of the state restoring program is performed on the basis of the commands and command groups that are extracted and stored. As for the command grouping, only the last command among each group is used to create the state restoring program. For example, in the case of the command group including M10, M11 and M12, an M code that is commanded last is M11 in FIG. 10 is M11, so that M10 is deleted, and only M11 is used. In the case of the command group including M20 and M21, since an M code that is commanded last is M20, only M20 is used.

In the case of the command for calling the M06 command as shown in the group 3, "M06 T0101" in which only the original machining program is written is read out, to thereby create the state restoring program. By executing the state restoring program, the machine state is restored.

The macro commands sorted into groups store arguments thereof. In the above example, the grouped macro commands of "M06" store the argument "T0101".

If the arguments are stored, execution can be performed as the macro commands of the original machining program, which makes it possible to restore the state at the time of suspension.

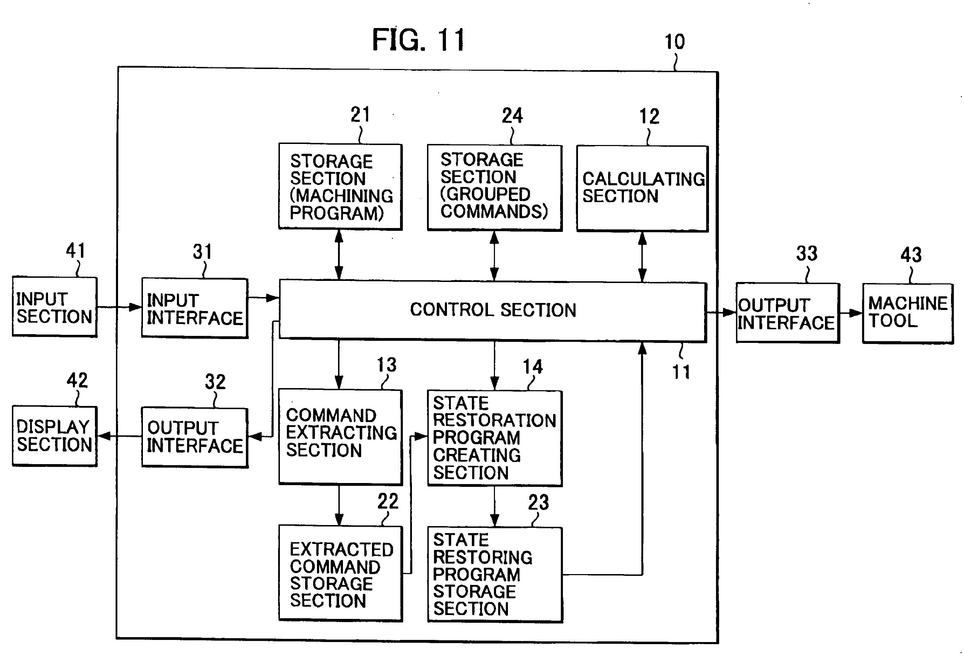

FIG. 11 is a configuration example of the main body of the numerical controller according to the second aspect. The main body of the numerical controller 10 has virtually the same configuration as the first configuration example, and includes a storage portion 24 that stores the grouped commands.

## Claims

1. A numerical controller for controlling a machine tool according to machining programs, having a function of resuming a suspended machining program, said numerical controller comprising:
registered command storage means storing registered commands to perform operations of the machine tool in the machining programs;
command extracting means for extracting registered commands stored in said command storage means in the machining program to be resumed;
state restoring program creating means for creating a state restoring program for restoring a state of the machine tool at the time of suspending the machining program by arranging the commands extracted by said command extracting means in a programmed order in the machining program to be resumed; and
executing means for executing the state restoring program created by said state restoring program creating means for resuming the suspended machining program.

2. A numerical controller according to claim 1, wherein the registered commands include a command to perform a series of operations by a combination of a plurality of miscellaneous function commands, a combination of miscellaneous function commands and motion commands, or a macro command.

3. A numerical controller according to claim 1, wherein the registered commands include commands registered in groups each for performing related operations of the machine tool, said command extracting means extracts the grouped commands in the machining program into the respective groups, and said state restoring program creating means creates the state restoring program by arranging the commands extracted by said command extracting means in a programmed order in the machining program and using grouped commands present last in the respective groups.

4. A numerical controller according to claim 3, wherein said command extracting means extracts an argument of a macro command included in the grouped commands.

5. A numerical controller according to claim 1, wherein said state restoring program creating means specifies a position of resuming the machining program by designating a block in the machining program.

6. A numerical controller according to claim 5, wherein the designation of the block by said state restoring program creating means is performed using a sequence number or a block number in the machining program.

7. A numerical controller according to claim 5, wherein said command extracting means extracts the registered commands from beginning of the machining program to a block immediately preceding the block at which the machining program is to be resumed.

8. A numerical controller according to claim 1, wherein the registered commands include a miscellaneous function command of a spindle function command or a tool function command.

9. A numerical controller according to claim 1, wherein the state restoring program is executed prior to a positioning operation of the machine tool to a position at which the machining program is resumed.
